# EUROPEAN PATENT APPLICATION

(11) **EP 4 625 949 A1**
(43) Date of publication of application: **01.10.2025**
(21) Application number: 23905664.1
(22) Date of filing: 30.11.2023
(51) Int. Cl.: H04M 1/02, H01Q 1/24

(54) **FOLDABLE ELECTRONIC DEVICE AND COMMUNICATION METHOD APPLIED TO FOLDABLE ELECTRONIC DEVICE**

(30) Priority: 21.12.2022 CN 202211649331
(71) Applicant: Huawei Technologies Co., Ltd., Shenzhen, Guangdong 518129 (CN)
(72) Inventor: WANG, Jikang, Shenzhen, Guangdong 518129 (CN); YU, Dong, Shenzhen, Guangdong 518129 (CN); WANG, Lei, Shenzhen, Guangdong 518129 (CN)
(74) Representative: Epping - Hermann - Fischer
(86) International application number: PCT/CN2023/135440
(87) International publication number: WO 2024/131497

(57) **Abstract**

This application provides a foldable electronic device and a communication method applied to the foldable electronic device. The foldable electronic device includes a foldable display, a first antenna component, a second antenna component, and a frame body. The frame body includes a first frame body, a second frame body, and a third frame body that are sequentially connected to each other. The first antenna component is disposed at an edge of the first frame body, and the second antenna component is disposed at an edge of the third frame body. The foldable electronic device further includes one or more processors, a memory, a plurality of applications, and one or more programs, where the one or more programs include instructions, and when the instructions are executed by the electronic device, the foldable electronic device is enabled to perform the following step: determining, based on a folding state of the foldable electronic device, to perform communication through at least one antenna in the first antenna component or second antenna component. When the foldable electronic device is in different states, a signal from a signal unit with higher signal strength may be preferentially obtained as a working signal.

## Description

### CROSS-REFERENCE TO RELATED APPLICATIONS

This application claims priority to Chinese Patent Application No. 202211649331.9, filed with the China National Intellectual Property Administration on December 21, 2022, entitled "FOLDABLE ELECTRONIC DEVICE AND COMMUNICATION METHOD APPLIED TO FOLDABLE ELECTRONIC DEVICE", which is incorporated herein by reference in its entirety.

### TECHNICAL FIELD

This application relates to the display field, and specifically, to a foldable electronic device and a communication method applied to the foldable electronic device.

### BACKGROUND

With development of science and technology, a portable communication device, for example, a mobile phone has become an indispensable tool in life. People's dependence on mobile phones has affected every aspect of life. Currently, a foldable smartphone has become a research hotspot. When the foldable smartphone is in a folded state, a small display may be obtained, to facilitate carrying. When the foldable smartphone is in an unfolded state, a large display may be obtained, to facilitate use. As a foldable screen is folded more times, for example, when the foldable screen is folded more than twice, that is, when there are at least three folding display areas, because an existing signal unit is disposed in only one folding display area, when the foldable screen is in a folded state or an unfolded state, signal strength obtained by the mobile phone is different, a signal in one of the states is weakened, affecting user experience.

### SUMMARY

This application provides a foldable electronic device and a communication method applied to the foldable electronic device, so that the foldable electronic device obtains high signal strength in both a folded state and an unfolded state. According to a first aspect, this application provides a foldable electronic device, including a foldable display, a first antenna component, a second antenna component, and a frame body. The frame body includes a first frame body, a second frame body, and a third frame body that are sequentially connected to each other. The foldable display is fastened to the frame body. When the foldable electronic device is in an unfolded state, the foldable display is stacked above the frame body, the first antenna component is disposed at an edge of the first frame body, and the second antenna component is disposed at an edge of the third frame body, or when the foldable electronic device is in a fully folded state, the second frame body is stacked between the first frame body and the third frame body. The foldable electronic device further includes one or more processors, a memory, a plurality of applications, and one or more programs, where the one or more programs are stored in the memory, the one or more programs include instructions, and when the instructions are executed by the electronic device, the foldable electronic device is enabled to perform the following step: determining, based on a folding state of the foldable electronic device, to perform communication through at least one antenna in the first antenna component or second antenna component.

The foldable electronic device in this application includes two antenna components: the first antenna component and the second antenna component. The first antenna component is disposed on the first frame body, and the second antenna component is disposed on the second frame body. The foldable electronic device may determine, based on the folding state of the foldable electronic device, to perform communication through at least one antenna in the first antenna component or second antenna component. Therefore, regardless of a state in which the foldable electronic device is in the fully folded state, a partially folded state, or the unfolded state, the foldable electronic device may perform communication through an antenna with higher signal strength in the first antenna component or second antenna component. In this way, signals of the foldable electronic device in different use states can be free from interference from the foldable screen, thereby meeting a user requirement.

In an optional implementation, the foldable display includes a first part, a second part, and a third part. When the foldable electronic device is in the unfolded state, the first part is stacked above the first frame body, the second part is stacked above the second frame body, and the third part is stacked above the third frame body; or when the foldable electronic device is in the fully folded state, the first part, the first frame body, the second frame body, the second part, the third part, and the third frame body are sequentially stacked. When the instructions are executed by the foldable electronic device, the foldable electronic device is enabled to perform the following step: when the foldable electronic device is in the fully folded state, performing communication through at least a part of antennas in the first antenna component. When the foldable electronic device is in the fully folded state, the first part, the first frame body, the second frame body, the second part, the third part, and the third frame body are sequentially stacked. In this case, signal receiving/transmitting strength of each antenna in the second antenna component is interfered with by the second part of the foldable display, and the signal receiving/transmitting strength of each antenna is low. However, each antenna in the first antenna component may not be affected by the foldable display and the frame body, and an antenna signal received/transmitted by each antenna in the first antenna component is better. Therefore, when the foldable electronic device is in the fully folded state, the at least a part of antennas in the first antenna component may be used for communication, to implement a better signal receiving/transmitting function.

In an optional implementation, the foldable display includes a first part, a second part, and a third part. When the foldable electronic device is in the unfolded state, the first part is stacked above the first frame body, the second part is stacked above the second frame body, and the third part is stacked above the third frame body; or when the foldable electronic device is in a partially folded state, the first part, the first frame body, the second frame body, and the second part are sequentially stacked, and the third frame body is unfolded relative to the second frame body. When the instructions are executed by the foldable electronic device, the foldable electronic device is enabled to perform the following step: when the foldable electronic device is in the partially folded state, performing communication through at least a part of antennas in the second antenna component. When the foldable electronic device is in the partially folded state, the first part, the first frame body, the second frame body, and the second part are sequentially stacked, the third frame body is unfolded relative to the second frame body, signal receiving/transmitting of each antenna in the first antenna component is affected by the frame body, signal receiving/transmitting strength of each antenna in the second antenna component is reduced, signal receiving/transmitting of each antenna in the second antenna component may not be affected by the foldable display and the frame body, and an antenna signal received/transmitted by the second antenna component is better. Therefore, when the foldable electronic device is in the partially folded state, the at least a part of antennas in the second antenna component may be used for communication, to implement a better signal receiving/transmitting function.

In an optional implementation, the foldable display includes a first part, a second part, and a third part. When the foldable electronic device is in the unfolded state, the first frame body, the second frame body, and the third frame body are unfolded, the first part is stacked above the first frame body, the second part is stacked above the second frame body, and the third part is stacked above the third frame body. The foldable electronic device includes a first radio frequency channel and a second radio frequency channel, where the first radio frequency channel includes the first antenna component and a first radio frequency circuit, and the second radio frequency channel includes the second antenna component and a second radio frequency circuit. When the instructions are executed by the foldable electronic device, the foldable electronic device is enabled to perform the following step: when the foldable electronic device is in the unfolded state, determining, based on signal strength of the first radio frequency channel and signal strength of the second radio frequency channel, to perform communication through at least one antenna in the first antenna component or second antenna component.

When the foldable electronic device is in the unfolded state, the first frame body, the second frame body, and the third frame body are unfolded, and neither signal receiving/transmitting of each antenna in the first antenna component nor signal receiving/transmitting of each antenna in the second antenna component is affected by the foldable display and the frame body. In this case, an antenna used for communication may be determined by comparing the signal strength of the first radio frequency channel with the signal strength of the second radio frequency channel. Through comparison, an antenna with better signal strength may be selected for communication, to ensure communication quality.

In an optional implementation, when the instructions are executed by the foldable electronic device, the foldable electronic device is enabled to perform the following steps:
in response to switching of the foldable electronic device from the fully folded state to the partially folded state, performing communication through the at least a part of antennas in the second antenna component;
in response to switching of the foldable electronic device from the partially folded state to the fully folded state, performing communication through the at least a part of antennas in the first antenna component;
in response to switching of the foldable electronic device from the partially folded state to the unfolded state, determining, based on the signal strength of the first radio frequency channel and the signal strength of the second radio frequency channel, to perform communication through at least one antenna in the first antenna component or second antenna component;
if the foldable electronic device is in the unfolded state and performs communication through at least one antenna in the first antenna component, in response to switching of the foldable electronic device from the unfolded state to the partially folded state, performing communication through at least one antenna in the second antenna component; or
if the foldable electronic device is in the unfolded state and performs communication through at least one antenna in the second antenna component, when the foldable electronic device switches from the unfolded state to the partially folded state, continuing to perform communication through the at least one antenna in the second antenna component.

According to the foregoing setting, when the foldable electronic device switches between the fully folded state, the partially folded state, and the unfolded state, the antenna used for communication may be switched accordingly, so that the foldable electronic device always keeps receiving/transmitting a high-strength signal.

In an optional implementation, the foldable electronic device includes the first radio frequency channel and the second radio frequency channel. The first radio frequency channel includes the first antenna component and the first radio frequency circuit, and the second radio frequency channel includes the second antenna component and the second radio frequency circuit. The foldable electronic device further includes a transfer module, and the transfer module is electrically connected between the second radio frequency circuit and the processor. In an optional implementation, the processor and the first radio frequency circuit are disposed in the first frame body, and the transfer module and the second radio frequency circuit are disposed in the third frame body; or the processor and the first radio frequency circuit are disposed in the first frame body, the transfer module is disposed in the second frame body, and the second radio frequency circuit is disposed in the third frame body. The transfer module amplifies a signal of the second radio frequency circuit. The transfer module is disposed, so that a transmission loss between the second radio frequency circuit and the processor can be reduced, and a signal transmission distance between the second radio frequency circuit and the processor can be increased.

In an optional implementation, a first hinge component is disposed between the first frame body and the first frame body, and a second hinge component is disposed between the second frame body and the third frame body. The at least a part of antennas in the first antenna component are disposed at a first edge of the first frame body, and a length extension direction of the first edge is parallel to a length extension direction of the first hinge component. The at least a part of antennas in the second antenna component are disposed at a first edge of the third frame body, and a length extension direction of the first edge is parallel to a length extension direction of the second hinge component.

In an optional implementation, the first antenna component includes a 2G (2-generation wireless telephone technology) antenna, a 3G (3rd-generation) antenna, a 4G (the 4th generation mobile communication technology) antenna, and a 5G (5th generation mobile communication technology) antenna, and the first antenna component further includes at least one of the following antennas: a global positioning system (global positioning system, GPS) antenna, a wireless fidelity (wireless fidelity, Wi-Fi) antenna, and a Bluetooth (Bluetooth, BT) antenna. Each second antenna component includes a 2G antenna, a 3G antenna, a 4G antenna, and a 5G antenna, and the second antenna component further includes at least one of a GPS antenna, a Wi-Fi antenna, or a Bluetooth antenna.

In an optional implementation, the first antenna component includes four 5G antennas, the second antenna component includes four 5G antennas, and the foldable electronic device performs communication through the four 5G antennas in the first antenna component or the four 5G antennas in the second antenna component, so that the foldable electronic device implements 5G 4*4 multiple-input multiple-output (multiple-input multiple-output, MIMO).

In another optional implementation, the first antenna component includes four 5G antennas, the second antenna component includes four 5G antennas, and the foldable electronic device performs communication through the four 5G antennas in the first antenna component and the four 5G antennas in the second antenna component, so that the foldable electronic device implements 5G 8*8 multiple-input multiple-output (multiple-input multiple-output, MIMO). When the foldable electronic device performs 5G 8*8 signal transmission, a data throughput of the foldable electronic device can be improved, to implement large-scale data transmission.

The 5G antenna is also referred to as a new radio (new radio, NR) antenna, and there may be four or eight 5G antennas, to implement 5G 4*4 MIMO or 5G 8*8 MIMO. The 2G antenna, the 3G antenna, and the 4G antenna all may include a middle and high band (middle and high band, MHB) antenna and a lower band (lower band, LB) antenna. The foregoing types and quantities of antennas are merely examples for description. In addition, the first antenna component and the second antenna component may further include another antenna, for example, a near field communication (near field communication, NFC) antenna.

In addition, the foldable electronic device in this application may further support time division duplex (time division duplexing, TDD) (N41/N78/N79) NR 2T/4R and frequency division duplex (frequency division duplexing, FDD) 1T/2R or 1T/4R signal transmission.

According to a second aspect, this application further provides a foldable electronic device, including a foldable display, a first antenna component, a second antenna component, and a frame body. The frame body includes a first frame body, a second frame body, a third frame body, and a fourth frame body that are sequentially connected to each other.

The foldable display is fastened to the frame body. When the foldable electronic device is in an unfolded state, the foldable display is stacked above the frame body, the first antenna component is disposed at an edge of the first frame body, and the second antenna component is disposed at an edge of the fourth frame body; or when the foldable electronic device is in a fully folded state, the second frame body and the third frame body are stacked between the first frame body and the fourth frame body. The foldable electronic device further includes one or more processors, a memory, a plurality of applications, and one or more programs, where the one or more programs are stored in the memory, the one or more programs include instructions, and when the instructions are executed by the electronic device, the foldable electronic device is enabled to perform the following step: determining, based on a folding state of the foldable electronic device, to perform communication through at least one antenna in the first antenna component or second antenna component.

According to a third aspect, this application further provides a communication method applied to a foldable electronic device. The foldable electronic device includes a foldable display, a first antenna component, a second antenna component, and a frame body. The frame body includes a first frame body, a second frame body, and a third frame body that are sequentially connected to each other. The foldable display is fastened to the frame body. When the foldable electronic device is in an unfolded state, the foldable display is stacked above the frame body, the first antenna component is disposed at an edge of the first frame body, and the second antenna component is disposed at an edge of the third frame body; or when the foldable electronic device is in a fully folded state, the second frame body is stacked between the first frame body and the third frame body.

The communication method includes: determining, based on a folding state of the foldable electronic device, to perform communication through at least one antenna in the first antenna component or second antenna component.

In an optional implementation, the foldable display includes a first part, a second part, and a third part. When the foldable electronic device is in the unfolded state, the first part is stacked above the first frame body, the second part is stacked above the second frame body, and the third part is stacked above the third frame body; or when the foldable electronic device is in the fully folded state, the first part, the first frame body, the second frame body, the second part, the third part, and the third frame body are sequentially stacked. The method further includes: when the foldable electronic device is in the fully folded state, performing communication through at least a part of antennas in the first antenna component.

In an optional implementation, the foldable display includes a first part, a second part, and a third part. When the foldable electronic device is in the unfolded state, the first part is stacked above the first frame body, the second part is stacked above the second frame body, and the third part is stacked above the third frame body; or when the foldable electronic device is in a partially folded state, the first part, the first frame body, the second frame body, and the second part are sequentially stacked, and the third frame body is unfolded relative to the second frame body. The communication method further includes: when the foldable electronic device is in the partially folded state, performing communication through at least a part of antennas in the second antenna component.

In an optional implementation, the foldable display includes a first part, a second part, and a third part. When the foldable electronic device is in the unfolded state, the first frame body, the second frame body, and the third frame body are unfolded, the first part is stacked above the first frame body, the second part is stacked above the second frame body, and the third part is stacked above the third frame body. The foldable electronic device includes a first radio frequency channel and a second radio frequency channel, where the first radio frequency channel includes the first antenna component and a first radio frequency circuit, and the second radio frequency channel includes the second antenna component and a second radio frequency circuit. The communication method further includes: when the foldable electronic device is in the unfolded state, determining, based on signal strength of the first radio frequency channel and signal strength of the second radio frequency channel, to perform communication through at least one antenna in the first antenna component or second antenna component.

In an optional implementation, the method further includes: in response to switching of the foldable electronic device from the fully folded state to the partially folded state, performing communication through the at least a part of antennas in the second antenna component;
in response to switching of the foldable electronic device from the partially folded state to the fully folded state, performing communication through the at least a part of antennas in the first antenna component;
in response to switching of the foldable electronic device from the partially folded state to the unfolded state, determining, based on the signal strength of the first radio frequency channel and the signal strength of the second radio frequency channel, to perform communication through at least one antenna in the first antenna component or second antenna component;
if the foldable electronic device is in the unfolded state and performs communication through at least one antenna in the first antenna component, in response to switching of the foldable electronic device from the unfolded state to the partially folded state, performing communication through at least one antenna in the second antenna component; or
if the foldable electronic device is in the unfolded state and performs communication through at least one antenna in the second antenna component, when the foldable electronic device switches from the unfolded state to the partially folded state, continuing to perform communication through the at least one antenna in the second antenna component.

For technical effects that can be achieved in the second aspect and the third aspect, refer to corresponding effect descriptions in the first aspect. Details are not described herein again.

### BRIEF DESCRIPTION OF DRAWINGS

FIG. 1 is a diagram of an unfolded structure of a foldable electronic device according to an embodiment;
FIG. 2 is a diagram of a back structure of a foldable electronic device according to an embodiment;
FIG. 3 is a diagram of a structure of a foldable electronic device in a folded state according to an embodiment;
FIG. 4 is a diagram of a structure of the foldable electronic device with the structure shown in FIG. 3 in a partially folded state;
FIG. 5 is a diagram of a structure of the foldable electronic device with the structure shown in FIG. 3 in an unfolded state;
FIG. 6 is a diagram of a structure of a foldable electronic device according to another embodiment; and
FIG. 7 is a schematic flowchart of a communication method of a foldable electronic device according to an embodiment.

### Reference numerals:

11: foldable display; 111: first part; 112: second part; 113: third part; 114: fourth part;
12: frame body; 121: first frame body; 122: second frame body; 123: third frame body; 124: fourth frame body; 13: processor;
14: first radio frequency channel; 141: first antenna component; 142: first radio frequency circuit; 15: second radio frequency channel;
151: second antenna component; 152: second radio frequency circuit; and 16: transfer module.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include expressions such as "one or more", unless otherwise specified in the context clearly.

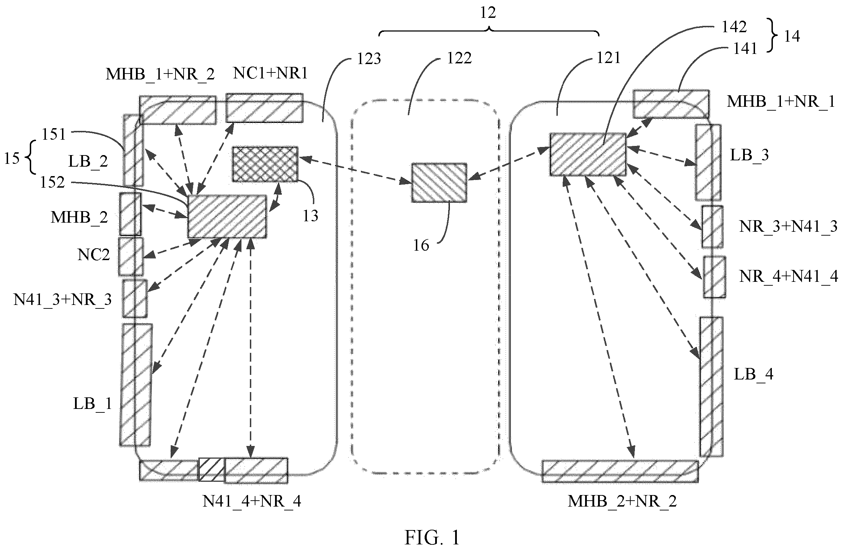

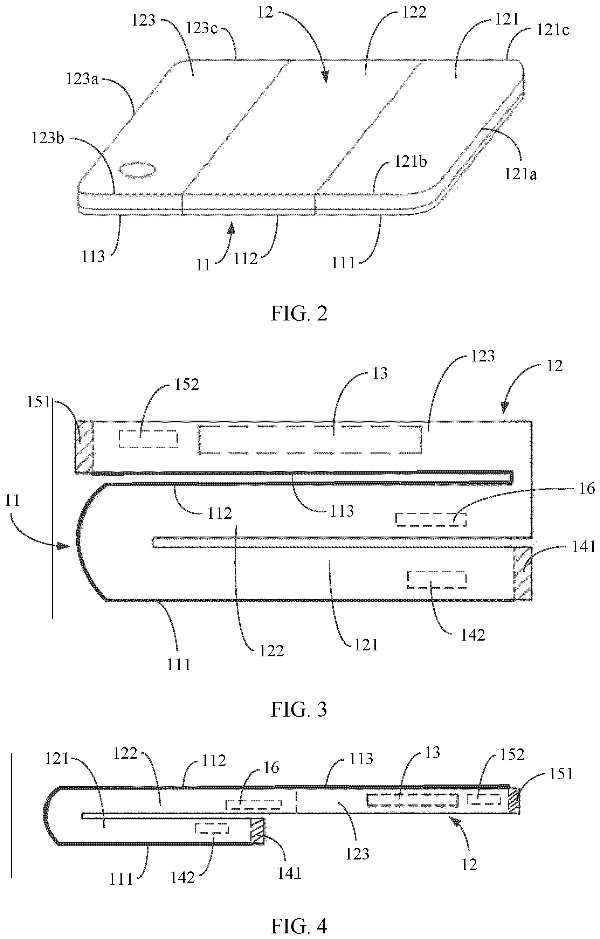

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in still some other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "including but not limited to", unless otherwise specifically emphasized in another manner. A current foldable electronic device, for example, a foldable smartphone, gradually develops towards a larger screen and more folds, to achieve an objective of a small screen in a folded state and a large screen in an unfolded state. However, after a quantity of folds of a display increases, because an antenna is disposed at a single position, under blocking effect of the display, the foldable electronic device has a large signal difference between the folded state and the unfolded state. In one state, a signal obtained through the antenna is weak, and user experience cannot be well met. To resolve the foregoing problem, this application provides a foldable electronic device. FIG. 1 is a diagram of an unfolded structure of the foldable electronic device. FIG. 2 is a diagram of a back structure of the foldable electronic device. As shown in FIG. 1 and FIG. 2, the foldable electronic device in this embodiment of this application includes a foldable display 11, a frame body 12, a first antenna component 141, a second antenna component 151, one or more processors 13, and one or more memories (not shown in the figure). The foldable display 11 may be fastened to the frame body 12, and the foldable display 11 and the frame body 12 may form accommodation space for packaging the first antenna component 141, the second antenna component 151, the processor 13, and the memory.

As shown in FIG. 2, the frame body 12 may be a metal frame body, or may be a plastic frame body. The frame body 12 is mainly used to fasten the foldable display 11 and package another component of the foldable electronic device. As shown in FIG. 2, in an embodiment, the frame body 12 may be divided into a first frame body 121, a second frame body 122, and a third frame body 123 that are sequentially connected to each other. A first hinge component (not shown in the figure) may be disposed between the first frame body 121 and the second frame body 122, and a second hinge component (not shown in the figure) may be disposed between the second frame body 122 and the third frame body 123. The first frame body 121 and the second frame body 122 may rotate relative to each other via the first hinge component, to implement unfolding or folding between the first frame body 121 and the second frame body 122. The second frame body 122 and the third frame body 123 may rotate relative to each other via the second hinge component, to implement unfolding or folding between the second frame body 122 and the third frame body 123.

Still refer to FIG. 1 and FIG. 2. In an embodiment, the foldable display 11 may be divided into a first part 111, a second part 112, and a third part 113. The first part 111 of the foldable display 11 is disposed corresponding to the first frame body 121, the second part 112 of the foldable display 11 is disposed corresponding to the second frame body 122, and the third part 113 of the foldable display 11 is disposed corresponding to the third frame body 123. When the first frame body 121 and the second frame body 122 rotate relative to each other, the first frame body 121 and the second frame body 122 may respectively drive the first part 111 and the second part 112 of the foldable display 11 to rotate relative to each other. Similarly, when the second frame body 122 and the third frame body 123 rotate relative to each other, the second frame body 122 and the third frame body 123 may respectively drive the second part 112 and the third part 113 of the foldable display 11 to rotate relative to each other. Therefore, state switching of the foldable electronic device can be implemented, so that the foldable electronic device has different folding states, for example, a fully folded state, a partially folded state, and an unfolded state.

In this embodiment of this application, when the foldable electronic device is in the unfolded state, the foldable display 11 is unfolded, and the foldable display 11 can perform full-screen display, so that the foldable electronic device has a large display area, to improve viewing experience and operation experience of a user. When the foldable electronic device is in the partially folded state or the fully folded state, a display size of the foldable display 11 is small, so that the user can conveniently carry and accommodate the foldable display 11.

A display layer with a display function and a touch layer with a touch sensing function may be integrated in the foldable display 11. The display layer of the foldable display 11 may be configured to display an image, a video, and the like. The touch layer of the foldable display 11 may be configured to sense a touch action of the user, to implement human-machine interaction. For example, the foldable display 11 includes a bendable flexible display. The flexible display may be a liquid crystal display (liquid crystal display, LCD), an organic light-emitting diode (organic light-emitting diode, OLED) display, an active-matrix organic light-emitting diode (active-matrix organic light emitting diode, AMOLED) display, a flexible light-emitting diode (flex light-emitting diode, FLED) display, a mini-LED display, a micro-LED display, a micro-OLED display, a quantum dot light-emitting diode (quantum dot light emitting diodes, QLED) display, or the like.

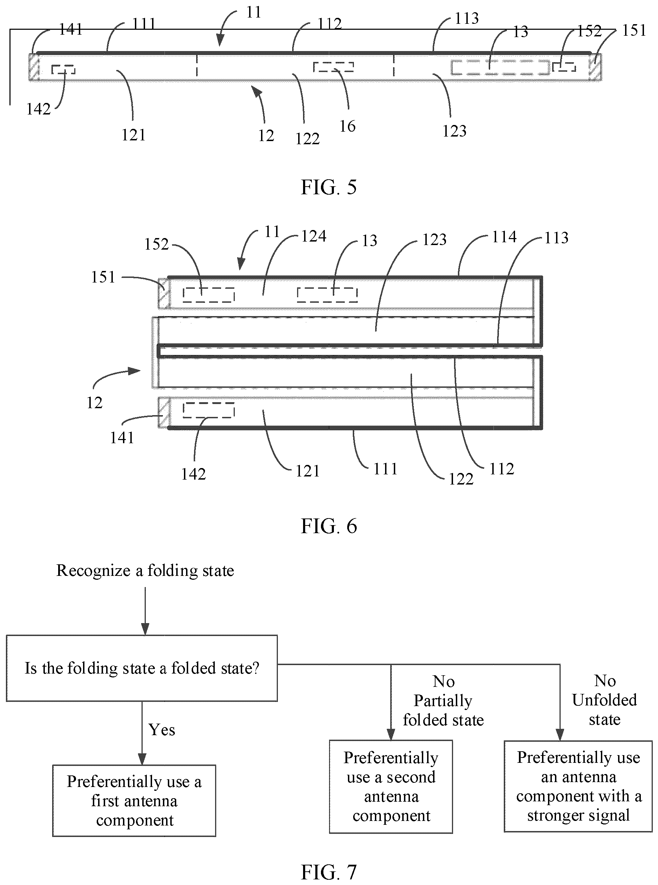

FIG. 3 is a diagram of a structure of the foldable electronic device in the fully folded state. FIG. 4 is a diagram of a structure of the foldable electronic device in the partially folded state. FIG. 5 is a diagram of a structure of the foldable electronic device in the unfolded state.

As shown in FIG. 3, when the foldable electronic device is in the fully folded state, the first part 111, the first frame body 121, the second frame body 122, the second part 112, the third part 113, and the third frame body 123 are sequentially stacked, and the second frame body 122 is stacked between the first frame body 121 and the third frame body 123. In this folding state, the first part 111 is an external display area, and may be used for displaying. The second part 112 and the third part 113 may be internal display areas, and may be in a screen-off state.

It may be understood that, when the foldable electronic device is in the fully folded state, the first frame body 121, the second frame body 122, and the third frame body 123 are not absolutely disposed in parallel, and all states in which an included angle between the first frame body 121 and the second frame body 122 is less than or equal to 90° and an included angle between the second frame body 122 and the third frame body 123 is less than or equal to 90° may be understood as that the foldable electronic device is in the fully folded state.

As shown in FIG. 4, when the foldable electronic device is in the partially folded state, the first part 111, the first frame body 121, the second frame body 122, and the second part 112 are sequentially stacked, the third frame body 123 is unfolded relative to the second frame body 122, and the third part 113 is unfolded relative to the second part 112. In this folding state, the second part and the third part may be used for displaying.

It may be understood that, when the foldable electronic device is in the fully folded state, the first frame body 121, the second frame body 122, and the third frame body 123 are not absolutely disposed in parallel, and all states in which an included angle between the first frame body 121 and the second frame body 122 is less than or equal to 90° and an included angle between the second frame body 122 and the third frame body 123 is greater than 90° may be understood as that the foldable electronic device is in the partially folded state.

As shown in FIG. 5, when the foldable electronic device is in the unfolded state, the foldable display 11 may be disposed above the frame body 12. In this case, the first frame body 121, the second frame body 122, and the third frame body 123 are unfolded, the first part 111 is stacked above the first frame body 121, the second part 112 is stacked above the second frame body 122, and the third part 113 is stacked above the third frame body 123. In this state, the first part 111, the second part 112, and the third part 113 of the foldable display 11 all are in a relative unfolded state, and the first part 111, the second part 112, and the third part 113 all may be used for displaying.

It may be understood that, when the foldable electronic device is in the fully folded state, the first frame body 121, the second frame body 122, and the third frame body 123 are not absolutely disposed in parallel, and all states in which an included angle between the first frame body 121 and the second frame body 122 is greater than 90° and an included angle between the second frame body 122 and the third frame body 123 is greater than 90° may be understood as that the foldable electronic device is in the unfolded state.

The foregoing describes structures of the foldable display 11 and the frame body 12 of the foldable electronic device in this embodiment of this application, the following describes disposing and communication manners of components such as the processor 13, the memory, the first antenna component 141, and the second antenna component 151 of the foldable electronic device.

Still refer to FIG. 1 and FIG. 2. In this embodiment of this application, the processor 13 may be disposed in an accommodation cavity formed by the foldable display 11 and the frame body 12, and the first antenna component 141 and the second antenna component 151 may be disposed at an edge of the frame body 12. In addition, in addition to the processor 13, other circuits and electronic components may be further disposed in the accommodation cavity formed by the foldable display 11 and the frame body 12. For example, the other circuits and electronic components may include an internal memory, an external memory interface, a universal serial bus (universal serial bus, USB) interface, a charging management module, a power management module, a battery, a camera, an audio module, a speaker, a receiver, a microphone, a headset jack, a sensor module, a button, a motor, an indicator, and a subscriber identification module (subscriber identification module, SIM) card interface.

There may be one or more processors 13. The processor 13 in this embodiment of this application may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processors may be independent components, or may be integrated into one or more processors.

A memory may be further disposed in the processor 13, and is configured to store instructions and data. In some embodiments, the memory in the processor 13 is a cache. The memory may store instructions or data just used or cyclically used by the processor. If the processor needs to use the instructions or the data again, the processor may directly invoke the instructions or the data from the memory. This avoids repeated access and reduces waiting time of the processor, thereby improving system efficiency. In some embodiments, the processor 13 may include one or more interfaces.

In an embodiment of this application, the processor 13 may be a system on chip (system on chip, SOC), and is an integrated circuit in which a computing processor and another electronic system are integrated into a single chip. Still refer to FIG. 1. The foldable electronic device in this embodiment of this application may include two antenna components: the first antenna component 141 and the second antenna component 151.

As shown in FIG. 1, the first antenna component 141 may communicate with the processor 13 via a first radio frequency circuit 142. The first antenna component 141 and the first radio frequency circuit 142 may form a first radio frequency channel 14. The first radio frequency circuit 142 may be disposed in the accommodation cavity formed by the foldable display 11 and the frame body 12. When the first radio frequency channel 14 communicates with the processor 13, the first radio frequency circuit 142 in the first radio frequency channel 14 may adjust and demodulate an electromagnetic wave signal obtained by the first antenna component 141 into a communication signal, and transmit the communication signal to the processor 13. The processor 13 may further transmit, to the first radio frequency circuit 142, instruction information that needs to be sent. The first radio frequency circuit 142 modulates and demodulates the instruction information, and then transmits the instruction information to the first antenna component 141. The first antenna component 141 sends the instruction information to the outside in a form of electromagnetic wave.

The second antenna component 151 may communicate with the processor 13 via a second radio frequency circuit 152. The second antenna component 151 and the second radio frequency circuit 152 may form a second radio frequency channel 15. The second radio frequency circuit 152 may be disposed in the accommodation cavity formed by the foldable display 11 and the frame body 12. When the second radio frequency channel 15 communicates with the processor 13, the second radio frequency circuit 152 in the second radio frequency channel 15 may adjust and demodulate an electromagnetic wave signal obtained by the second antenna component 151 into a communication signal, and transmit the communication signal to the processor 13. The processor 13 may further transmit, to the second radio frequency circuit 152, instruction information that needs to be sent. The second radio frequency circuit 152 modulates and demodulates the instruction information, and then transmits the instruction information to the second antenna component 151. The second antenna component 151 sends the instruction information to the outside in a form of electromagnetic wave.

In the foldable electronic device, the first antenna component 141 is coupled to the first radio frequency circuit 142, and the second antenna component 151 is coupled to the second radio frequency circuit 152, so that the foldable electronic device can communicate with a network and another device by using a wireless communication technology. The first radio frequency circuit 142 performs frequency modulation and filtering on the electromagnetic wave signal received by the first antenna component 141, and sends a processed signal to the processor 13. The processor 13 performs display or data processing. The first radio frequency circuit 142 may further receive a to-be-sent signal, for example, a voice signal or a data signal, from the processor 13, modulate and demodulate the signal, and convert, via the first antenna component 141, the signal into an electromagnetic wave for radiation. In some embodiments, at least a part of functional modules of the first radio frequency circuit 142 may be disposed in the processor 13. In some embodiments, at least a part of functional modules of the first radio frequency circuit 142 and at least a part of modules of the processor 13 may be disposed in a same device. Similarly, the second radio frequency circuit 152 may further receive a to-be-sent signal, for example, a voice signal or a data signal, from the processor 13, modulate and demodulate the signal, and convert, via the 151, the signal into an electromagnetic wave for radiation. In some embodiments, at least a part of functional modules of the second radio frequency circuit 152 may be disposed in the processor 13. In some embodiments, at least a part of functional modules of the second radio frequency circuit 152 and at least a part of modules of the processor 13 may be disposed in a same device.

Both the first radio frequency circuit 142 and the second radio frequency circuit 152 may include a mobile communication module and a wireless communication module. The first antenna component 141 and the second antenna component 151 of the foldable device are coupled to the mobile communication module, or the first antenna component 141 and the second antenna component 151 are coupled to the wireless communication module, so that the foldable electronic device can communicate with a network and another device by using a wireless communication technology. The mobile communication module may provide a solution that is applied to the foldable electronic device and that includes wireless communication such as 2G/3G/4G/5G. The wireless communication module may provide a solution that is applied to the foldable electronic device and that includes wireless communication such as a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), (frequency modulation, FM), near field communication (near field communication, NFC), and an infrared (infrared, IR) technology.

The foldable electronic device in this embodiment of this application may include a plurality of applications and one or more programs, where the one or more programs are stored in the memory, the one or more programs include instructions, and when the instructions are executed by the electronic device, the foldable electronic device is enabled to perform the following step: determining, based on a folding state of the foldable electronic device, to perform communication through at least one antenna in the first antenna component 141 or second antenna component 151. The following describes, with reference to FIG. 3 to FIG. 5, a principle and a process of determining a working antenna of the foldable electronic device according to this embodiment of this application.

Refer to FIG. 3. The foldable electronic device is in the fully folded state, the first part 111 is the external display area, and the third part 113 is the internal display area. In this state, in a stacking direction of the first part 111, the second part 112, and the third part 113, each antenna in the second antenna component 151 is disposed close to a bending connection area of the first part 111 and the second part 112. A material of the foldable display 11 is usually a wave-absorbing material. For example, the touch layer and the display layer of the foldable display 11 are mostly made from poor conductors, and have a low conductivity. Therefore, energy of an electromagnetic wave signal is coupled to the touch layer and the display layer of the foldable display 11. Therefore, the touch layer and the display layer of the foldable display 11 absorb a part of electromagnetic wave signals, and signal strength of an electromagnetic wave signal received/transmitted by each antenna in the second antenna component 151 is reduced. In addition, when the foldable electronic device is in the fully folded state, because each antenna in the first antenna component 141 is disposed at the edge of the foldable display 11, in a stacking direction of the foldable display 11, each antenna in the first antenna component 141 is not adjacent to the foldable display 11. In this way, each antenna in the first antenna component 141 is not covered by the foldable display 11. Therefore, interference caused by the foldable display 11 to signal receiving/transmitting of each antenna in the first antenna component 141 is small. Therefore, when the foldable electronic device is in the fully folded state, the at least a part of antennas in the first antenna component 141 are used to perform signal transmission with the processor 13, so that the processor obtains a stronger transmission signal. Refer to FIG. 4. When the foldable electronic device is in the partially folded state, the second part 112 and the third part 113 are in the unfolded state, and are used for external display. In this case, each antenna in the first antenna component 141 is shielded by a housing component 12 corresponding to the second part 112 and the third part 113, and a frame body 12 (for example, a side frame, a middle frame, or a hinge component) corresponding to the second part 112 and the third part 113 shields an electromagnetic wave signal. In this case, strength of an electromagnetic wave signal obtained by the first antenna component 141 or transmitted by the first antenna component 141 to the outside decreases, and the second antenna component 151 can obtain a stronger electromagnetic wave signal because the second antenna component 151 is not interfered with by the frame body 12. Therefore, refer to FIG. 4. When the foldable electronic device is in the partially folded state, at least a part of antennas in the second antenna component 151 are used for communication.

Refer to FIG. 5. When the foldable electronic device is in the unfolded state, the first part 111, the second part 112, and the third part 113 all are in the unfolded state in which the first part 111, the second part 112, and the third part 113 are sequentially connected to each other, and all the three parts may be used for displaying. In this state, strength of a communication signal of the two first antenna components 141 and strength of a communication signal of the second antenna component 151 may be compared to determine an antenna that is used for communication with the processor 13.

When the strength of the communication signal of the first antenna component 141 and the strength of the communication signal of the second antenna component 151 are compared, the processor 13 may be used to separately obtain the communication signal of the first antenna component 141 and the communication signal of the second antenna component 151. In addition, the processor 13 is used to compare the strength of the communication signal of the first antenna component 141 and the strength of the communication signal of the second antenna component 151, and select an antenna component with a stronger communication signal from the first antenna component 141 and the second antenna component 151 for communication. It may be understood that, in this comparison manner, a radio frequency processing function may be integrated into the processor 13.

In addition, refer to FIG. 5. In an embodiment, when the foldable electronic device is in the unfolded state, it may be determined, based on signal strength of the first radio frequency channel 14 and signal strength of the second radio frequency channel 15, to perform communication through at least one antenna in the first antenna component 141 or second antenna component 151. In this case, the first radio frequency channel 14 and the second radio frequency channel 15 may communicate with each other, and strength of a communication signal of the first radio frequency channel 14 and strength of a communication signal of the second radio frequency channel 15 are compared by the first radio frequency channel 14 or second radio frequency channel 15 that has a radio frequency processing function. The first radio frequency channel 14 or second radio frequency channel 15 with a stronger communication signal may transmit a communication signal obtained through modulation and demodulation to the processor 13. It may be understood that, after comparison, the first radio frequency channel 14 or second radio frequency channel 15 with a weaker communication signal may still be in a working state, or may be in a sleep state and no longer work.

In an optional embodiment, to save power of the foldable electronic device, after comparison, the first radio frequency channel 14 or second radio frequency channel 15 with a weaker communication signal may be in the sleep state. In addition, the first radio frequency channel 14 or second radio frequency channel 15 in the sleep state may also be periodically woken up based on a preset frequency, to be periodically compared with the second radio frequency channel 15 or first radio frequency channel 14 in the working state, so as to determine whether switching between the antenna components needs to be performed to obtain an electromagnetic wave signal, so that the foldable electronic device better obtains the electromagnetic wave signal.

When the processor 13 sends an instruction to the outside, the processor 13 may demodulate a communication signal through the first radio frequency channel 14 or second radio frequency channel 15, and transmit an electromagnetic wave signal to the outside through the radio frequency channel.

It may be understood that the foldable electronic device may communicate with the processor 13 through both the first radio frequency channel 14 and the second radio frequency channel 15, and simultaneously obtain a communication signal of the first radio frequency channel 14 or second radio frequency channel 15 as a working signal. However, to reduce a power loss of the foldable electronic device, the foldable electronic device may determine, in the foregoing manner, one of the radio frequency channels to communicate with the processor 13.

When the folding state of the foldable electronic device changes, the foldable electronic device may perform switching based on a folding state of the foldable electronic device. Specifically, when the folding state of the foldable electronic device changes, and the instructions of the foldable electronic device are executed by the foldable electronic device, the foldable electronic device is enabled to perform the following steps:
SA: in response to switching of the foldable electronic device from the fully folded state to the partially folded state, performing communication through the at least a part of antennas in the second antenna component 151;
SB: in response to switching of the foldable electronic device from the partially folded state to the fully folded state, performing communication through the at least a part of antennas in the first antenna component 141;
SC: in response to switching of the foldable electronic device from the partially folded state to the unfolded state, determining, based on the signal strength of the first radio frequency channel 14 and the signal strength of the second radio frequency channel 15, to perform communication through at least one antenna in the first antenna component 141 or second antenna component 151;
SD: if the foldable electronic device is in the unfolded state and performs communication through at least one antenna in the first antenna component 141, in response to switching of the foldable electronic device from the unfolded state to the partially folded state, performing communication through at least one antenna in the second antenna component 151; or
if the foldable electronic device is in the unfolded state and performs communication through at least one antenna in the second antenna component 151, when the foldable electronic device switches from the unfolded state to the partially folded state, continuing to perform communication through at least one antenna in the second antenna component 151.

Both the first antenna component 141 and the second antenna component 151 may include a plurality of antennas. Each antenna in the first antenna component 141 and the second antenna component 151 is configured to transmit and receive electromagnetic wave signals. The plurality of antennas may work independently of each other, or may work in combination. Each antenna in the foldable electronic device may be configured to cover one or more communication bands. For example, each antenna in the first antenna component 141 and the second antenna component 151 may include a middle and high band (middle and high band, MHB) antenna and a lower band (lower band, LB) antenna, or an NFC antenna. Different antennas may be further multiplexed, to improve antenna utilization.

The first antenna component 141 may include a 2G antenna, a 3G antenna, a 4G antenna, and a 5G antenna. There may be one or more 2G antennas, 3G antennas, 4G antennas, and 5G antennas, for example, two, three, four, five, or more. In addition, the first antenna component further includes at least one of a GPS antenna, a Wi-Fi antenna, and a Bluetooth antenna. Each second antenna component includes a 2G antenna, a 3G antenna, a 4G antenna, and a 5G antenna. There may be one or more 2G antennas, 3G antennas, 4G antennas, and 5G antennas, for example, two, three, four, five, or more. In addition, the second antenna component further includes at least one of a GPS antenna, a Wi-Fi antenna, and a Bluetooth antenna. It may be understood that the 2G antenna, the 3G antenna, the 4G antenna, and the 5G antenna may be disposed in both the first antenna component 141 and the second antenna component 151. The GPS antenna, the Wi-Fi antenna, and the BT antenna may be selectively disposed in one of the first antenna component 141 and the second antenna component 151, or may be disposed in both the first antenna component 141 and the second antenna component 151.

Still refer to FIG. 1. The first antenna component 141 is disposed at an edge of the first frame body 121, and the second antenna component 151 is disposed at an edge of the third frame body 123.

Refer to both FIG. 1 and FIG. 2. The first frame body 121 includes a first edge 121a, a second edge 121b, and a third edge 121c. The first edge 121a is an edge away from a side edge of the first hinge component, and a length extension direction of the first edge 121a is parallel to a length extension direction of the first hinge component. The second edge 121b and the third edge 121c are respectively edges of side edges adjacent to the first hinge component. To reduce impact of the first hinge component on signal receiving/transmitting of the first antenna component 141, the plurality of antennas in the first antenna component 141 may be disposed along the first edge 121a, the second edge 121b, and the third edge 121c of the first frame body 121, and the at least a part of antennas are disposed along the first edge 121a.

Similarly, the third frame body 123 includes a first edge 123a, a second edge 123b, and a third edge 123c. The first edge 123a is an edge away from a side edge of the second hinge component, and a length extension direction of the first edge 123a is parallel to a length extension direction of the second hinge component. The second edge 123b and the third edge 123c are respectively edges of side edges adjacent to the second hinge component. To reduce impact of the second hinge component on signal receiving/transmitting of the second antenna component 151, the plurality of antennas in the second antenna component 151 may be disposed along the first edge 123a, the second edge 123b, and the third edge 123c of the third frame body 123, and the at least a part of antennas are disposed along the first edge 123a.

In the first antenna component 141, there may be a plurality of 5G antennas, and the plurality of 5G antennas may be distributed at the first edge 121a, the second edge 121b, and the third edge 121c of the first frame body 121. There may be at least one 2G antenna, at least one 3G antenna, and at least one 4G antenna, and the at least one 2G antenna, the at least one 3G antenna, and the at least one 4G antenna may be disposed along at least one edge of the first frame body 121, or disposed on at least one of the first edge 121a, the second edge 121b, or the third edge 121c. In the second antenna component 151, there may be a plurality of 5G antennas, and the plurality of 5G antennas may be distributed at the first edge 123a, the second edge 123b, and the third edge 123c of the third frame body 123. There may be at least one 2G antenna, at least one 3G antenna, and at least one 4G antenna, and the at least one 2G antenna, the at least one 3G antenna, and the at least one 4G antenna may be disposed along at least one edge of the third frame body 123, or disposed on at least one of the first edge 123a, the second edge 123b, or the third edge 123c.

When the folding state of the foldable electronic device changes, and switching between the first antenna component 141 and the second antenna component 151 needs to be performed, receiving/transmitting of each antenna in the first antenna component 141 may be simultaneously switched to receiving/transmitting of an antenna in the second antenna component 151. Alternatively, receiving/transmitting of a part of the antennas in the first antenna component 141 may be switched to receiving/transmitting of antennas in the second antenna component 151.

When the folding state of the foldable electronic device changes, each antenna disposed at the first edge 121a is interfered with by the foldable display 11, or is interfered with by the frame body 12, but each antenna at the second edge 121b and the third edge 121c is less interfered with by the foldable display 11 or the frame body 12. Therefore, during partial switching, the antenna disposed at the first edge 121a may be switched, the antennas disposed at the second edge 121b and the third edge 121c may not be switched as the folding state changes, or may be switched as the folding state changes.

For example, in an embodiment, a BT antenna, a GPS antenna, or a Wi-Fi antenna may be disposed only on one of the first frame body 121 or the third frame body 123, for example, may be disposed on at least one of the second edge 121b or the third edge 121c of the first frame body 121. When the folding state of the foldable electronic device changes, the BT/GPS/Wi-Fi antenna disposed on the first frame body 121 is still used for communication with the processor 13. In another embodiment, a BT/GPS/Wi-Fi antenna may be disposed on each of the first frame body 121 and the third frame body 123. When the folding state of the electronic device changes, the BT/GPS/Wi-Fi antenna may be switched accordingly. Similarly, the foregoing switching manner is also applicable to switching of the 2G antenna, the 3G antenna, the 4G antenna, and the 5G antenna.

Still refer to FIG. 1. To implement 5G 4*4 multiple-input multiple-output (multiple-input multiple-output, MIMO) communication, that is, to transmit data through four 5G antennas (for example, NR antennas), and receiving data through four 5G antennas, in this embodiment of this application, there are four 5G antennas in each of the first antenna component 141 and the second antenna component 151. Each 5G antenna can implement one input and one output. In this way, when the foldable electronic device is in different folding states, the four 5G antennas in the first antenna component 141 or the four 5G antennas in the second antenna component 151 may be used to perform signal transmission with the processor 13, to implement a 5G 4*4 transmission standard. When the foldable electronic device communicates with the processor 13 via the first antenna component 141 and the second antenna component 151, when the foldable electronic device needs to send a signal, the processor 13 may transmit a sending instruction to the antenna component, the antenna component modulates and demodulates an electromagnetic wave signal and then sends the electromagnetic wave signal to the outside. When the foldable electronic device needs to receive a signal, the antenna component may modulate and demodulate an obtained electromagnetic wave signal into a communication signal, and transmit the demodulated communication signal to the processor.

In a conventional two-fold foldable electronic device (a foldable display includes only two foldable parts), because an antenna is usually disposed on an edge of the foldable display, if one antenna component is correspondingly disposed on each of the two parts of the two-fold foldable electronic device, when the two-fold foldable electronic device is in a folded state, antennas (for example, four NR antennas) in the two antenna components are located on a same side of the foldable electronic device and are disposed opposite to each other, and are close to each other. As a result, receiving/transmitting of electromagnetic wave signals between the antennas in the two antenna components affects each other, and signal strength of an electromagnetic wave signal received by each NR antenna is deteriorated. In addition, in the two-fold foldable electronic device, because disposing space of the foldable electronic device is limited, when a plurality of antenna components are disposed, disposing space of another element, for example, a battery or a central processing unit, is reduced. As a result, for the two-fold foldable electronic device, 5G 8*8 data transmission cannot be implemented.

However, in an embodiment of this application, refer to FIG. 1 to FIG. 5. Both the first antenna component 141 and the second antenna component 151 may include four 5G antennas (for example, four NR antennas shown in the figure). The foldable electronic device in this application includes at least three folds (the foldable display includes at least three parts), and the 5G antennas in the two antenna components are respectively disposed at the edge of the first part 111 and the edge of the third part 113. Therefore, regardless of whether the foldable electronic device is in the folded state, the partially folded state, or the unfolded state, disposing positions of the antennas in the two antenna components are more flexible; and the antennas in the two antenna components are respectively disposed on two sides of the foldable electronic device, or there is another component (for example, the frame body 12) between the first antenna component 141 and the second antenna component 151 after folding, so that the first antenna component 141 and the second antenna component 151 are spaced in a stacking direction of the foldable display 11. Therefore, when both the first antenna component 141 and the second antenna component 151 work, the 5G antennas of the two antenna components may not interfere with each other, to ensure that the foldable electronic device can implement a 5G 8*8 data transmission mode, that is, transmitting data through eight NR antennas and receiving data through eight NR antennas, so as to improve a data receiving/transmitting speed and a data throughput. When the foldable electronic device performs the 5G 8*8 transmission mode, the processor 13 may deliver a sending instruction to both the first antenna component 141 and the second antenna component 151, and both the first antenna component 141 and the second antenna component 151 send an electromagnetic wave signal. In this implementation, both the first antenna component 141 and the second antenna component 151 are configured to receive/transmit an electromagnetic wave signal, and communicate with the processor 13.

Two LB antennas, two MHB antennas, and one NC antenna may be further disposed in each signal unit of the foldable electronic device in this embodiment of this application. The LB antenna, the MHB antenna, and the NC antenna are disposed, to receive/transmit different radio signals in different frequency bands. In addition, the foldable electronic device in this application may further support time division duplex (time division duplexing, TDD) (N41/N78/N79) NR 2T/4R (2T/4R) and frequency division duplex (frequency division duplexing, FDD) 1T/2R (1T/2R) or 1T/4R (1T/4R) signal transmission.

Still refer to FIG. 1. When the processor 13 is disposed in accommodation space formed by the first part 111 and the first frame body 121, a communication distance between the first radio frequency channel 14 including the first antenna component 141 and the first radio frequency circuit 142 and the processor 13 is short, but a communication distance between the second radio frequency channel 15 including the second antenna component 151 and the second radio frequency circuit 152 and the processor 13 is long, so that a communication distance between the second radio frequency circuit 152 and the processor 13 increases. During signal transmission, a specific signal loss occurs. To reduce such a signal loss, in an embodiment of this application, the foldable electronic device may further include a transfer module 16, and the transfer module 16 may be electrically connected between the second radio frequency circuit 152 and the processor 13. During disposing, the processor 13 and the first radio frequency circuit 142 may be disposed in the first frame body 121, and the transfer module 16 and the second radio frequency circuit 152 may be disposed in the third frame body 123. Alternatively, the processor 13 and the first radio frequency circuit 142 may be disposed in the first frame body 121, the transfer module 16 may be disposed in the second frame body 122, and the second radio frequency circuit 152 may be disposed in the third frame body 123.

The second radio frequency circuit 152 is coupled to the transfer module 16 to transmit a signal. The transfer module 16 may further amplify a signal of the second radio frequency circuit 152. For example, the transfer module 16 may couple and transmit, to the processor 13, a signal processed by the second radio frequency circuit 152. The transfer module 16 may further perform signal amplification and signal amplitude increase on a signal transmitted by the second radio frequency circuit 152, and then transmit the signal to the processor 13, to reduce a signal transmission loss and increase a signal transmission distance. The processor 13 may further transmit, to the second radio frequency circuit 152 via the transfer module 16, a signal that needs to be sent, and the second radio frequency circuit 152 sends the signal to the outside.

The foregoing describes the structure of the foldable electronic device in an embodiment. Based on a same technical concept, an embodiment of this application further provides another foldable electronic device. FIG. 6 is a diagram of a structure of another foldable electronic device. As shown in FIG. 6, the foldable electronic device includes a foldable display 11, a first antenna component 141, a second antenna component 151, and a frame body 12. The foldable display 11 is fastened to the frame body 12. The frame body 12 includes a first frame body 121, a second frame body 122, a third frame body 123, and a fourth frame body 124 that are sequentially connected to each other. Correspondingly, the foldable display 11 includes a first part 111, a second part 112, a third part 113, and a fourth part 114. The first part 111, the second part 112, the third part 113, and the fourth part 114 are disposed respectively corresponding to the first frame body 121, the second frame body 122, the third frame body 123, and the fourth frame body 124.

When the foldable electronic device is in an unfolded state, the foldable display 11 is stacked above the frame body 12. When the foldable electronic device is in a fully folded state, the second frame body 122 and the third frame body 123 are stacked between the first frame body 121 and the fourth frame body 124. The second frame body 122 is stacked close to the first frame body 121, and the third frame body 123 is stacked close to the fourth frame body 124. The first antenna component 141 is disposed at an edge of the first frame body 121, and the second antenna component 151 is disposed at an edge of the fourth frame body 124. The foldable electronic device further includes one or more processors, a memory, a plurality of applications, and one or more programs, where the one or more programs are stored in the memory, the one or more programs include instructions, and when the instructions are executed by the electronic device, the foldable electronic device is enabled to perform the following step: determining, based on a folding state of the foldable electronic device, to perform communication through at least one antenna in the first antenna component 141 or second antenna component 151.

For a specific relationship between the foldable display 11, the first antenna component 141, the second antenna component 151, and the frame body 12 of the foldable electronic device shown in FIG. 6, switching of the folding state of the foldable electronic device, and communication between the first antenna component 141 and the processor 13 and between the second antenna component 151 and the processor 13, refer to the descriptions of the embodiments shown in FIG. 1 to FIG. 5 in this application. Details are not described herein again.

Based on a same technical concept, this application further provides a communication method applied to a foldable electronic device. For a structure of the foldable electronic device, refer to the foldable electronic device with the structures shown in FIG. 1 to FIG. 6. The foldable electronic device includes a foldable display, a first antenna component, a second antenna component, and a frame body. The frame body includes a first frame body, a second frame body, and a third frame body that are sequentially connected to each other. The foldable display is fastened to the frame body. When the foldable electronic device is in an unfolded state, the foldable display is stacked above the frame body, the first antenna component is disposed at an edge of the first frame body, and the second antenna component is disposed at an edge of the third frame body; or when the foldable electronic device is in a fully folded state, the second frame body is stacked between the first frame body and the third frame body. The communication method applied to a foldable electronic device in this embodiment of this application includes: determining, based on a folding state of the foldable electronic device, to perform communication through at least one antenna in the first antenna component or second antenna component.

For the structure of the foldable electronic device, refer to the descriptions of the foldable electronic device with the structures shown in FIG. 1 to FIG. 6. A specific structure of the foldable electronic device is not described in detail herein.

In an optional embodiment, when the foldable electronic device is in the fully folded state, the first part, the first frame body, the second frame body, the second part, the third part, and the third frame body are sequentially stacked. The communication method in this embodiment of this application further includes: when the foldable electronic device is in the fully folded state, performing communication through at least a part of antennas in the first antenna component. In an optional embodiment, when the foldable electronic device is in a partially folded state, the first part, the first frame body, the second frame body, and the second part are sequentially stacked, and the third frame body is unfolded relative to the second frame body. The communication method in this embodiment of this application further includes: when the foldable electronic device is in the partially folded state, performing communication through at least a part of antennas in the second antenna component.

In an optional embodiment, when the foldable electronic device is in the unfolded state, the first frame body, the second frame body, and the third frame body are unfolded, the first part is stacked above the first frame body, the second part is stacked above the second frame body, and the third part is stacked above the third frame body. The foldable electronic device includes a first radio frequency channel and a second radio frequency channel, where the first radio frequency channel includes the first antenna component and a first radio frequency circuit, and the second radio frequency channel includes the second antenna component and a second radio frequency circuit. When the foldable electronic device is in the unfolded state, it is determined, based on signal strength of the first radio frequency channel and signal strength of the second radio frequency channel, to perform communication through at least one antenna in the first antenna component or second antenna component.

In an optional embodiment, the communication method further includes:
in response to switching of the foldable electronic device from the fully folded state to the partially folded state, performing communication through the at least a part of antennas in the second antenna component;
in response to switching of the foldable electronic device from the partially folded state to the fully folded state, performing communication through the at least a part of antennas in the first antenna component;
in response to switching of the foldable electronic device from the partially folded state to the unfolded state, determining, based on the signal strength of the first radio frequency channel and the signal strength of the second radio frequency channel, to perform communication through at least one antenna in the first antenna component or second antenna component;
if the foldable electronic device is in the unfolded state and performs communication through at least one antenna in the first antenna component, in response to switching of the foldable electronic device from the unfolded state to the partially folded state, performing communication through at least one antenna in the second antenna component; or
if the foldable electronic device is in the unfolded state and performs communication through at least one antenna in the second antenna component, when the foldable electronic device switches from the unfolded state to the partially folded state, continuing to perform communication through the at least one antenna in the second antenna component.

FIG. 7 is a schematic flowchart of a communication method of a foldable electronic device according to an embodiment. Refer to FIG. 3 to FIG. 5 and FIG. 7. In an embodiment, the communication method of the foldable electronic device includes the following steps:
S11: Determine that the foldable electronic device is in a fully folded state, and preferably use the first antenna component 141: When the processor 13 determines that the foldable electronic device is in the fully folded state, the processor 13 communicates with at least a part of antennas in the first antenna component 141 of the first radio frequency channel 14. In this case, the at least a part of antennas in the first antenna component 141 obtain an electromagnetic wave signal, the first antenna component 141 transmits the obtained electromagnetic wave signal to the first radio frequency circuit 142, and the first radio frequency circuit 142 transmits a modulated and demodulated communication signal to the processor 13.

In this state, the processor 13 may directly control each antenna in the first antenna component 141 to work, and obtain the communication signal modulated and demodulated by the first radio frequency circuit 142.

It may be understood that, in this step, when the foldable electronic device is in the fully folded state and uses the communication signal of the first radio frequency channel 14 as a working signal, the second antenna component 151 in the second radio frequency channel 15 may be in a working state to obtain an electromagnetic wave signal, or may be in a non-working state not to obtain an electromagnetic wave signal. Signal transmission between the second radio frequency channel 15 and the processor 13 may not be performed, and a communication signal generated by the second radio frequency channel 15 may be used as a standby signal. When the first radio frequency channel 14 is faulty and cannot obtain an electromagnetic wave signal or cannot process or convert an electromagnetic wave signal, a communication signal of the second radio frequency channel 15 may be obtained as a working signal, to communicate with the processor 13. In a preferred embodiment of this application, when the foldable electronic device is in the fully folded state, and the first radio frequency channel communicates with the processor 13, the second radio frequency channel 15 may be in a non-working state, to reduce a power loss of the foldable electronic device.

S12: Determine that the foldable electronic device is in a fully folded state, and preferably use the second antenna component 151: When the processor 13 determines that the foldable electronic device is in a bent state, the processor 13 performs signal transmission with at least a part of antennas in the second antenna component 151. In this state, the processor 13 may control an antenna in the second antenna component 151 to work, and a communication signal of the second radio frequency channel 15.

In this step, when the foldable electronic device is in the partially folded state and uses the communication signal of the second radio frequency channel 15 as a working signal, the first radio frequency channel 14 may be in a working state to obtain the electromagnetic wave signal, or may be in a non-working state not to obtain an electromagnetic wave signal. The foldable electronic device is in the partially folded state. In this case, even if the first radio frequency channel 14 is in the working state, signal transmission between the first radio frequency channel 14 and the processor 13 may not be performed, and a communication signal generated by the first radio frequency channel 14 may be used as a standby signal unit. When the second radio frequency channel 15 is faulty and cannot obtain an electromagnetic wave signal or cannot process or convert an electromagnetic wave signal, a communication signal of the first radio frequency channel 14 may be obtained as a working signal, to communicate with the processor 13. In an optional embodiment of this application, when the foldable electronic device is in the partially folded state, and the processor 13 communicates with the second radio frequency channel 15, the first radio frequency channel 14 may be in a non-working state, to reduce a power loss of the foldable electronic device.

S13: Determine that the foldable electronic device is in an unfolded state, and preferably use an antenna component with a stronger signal. When the processor 13 determines that the foldable electronic device is in the unfolded state, any one of the following manners is used:
(1) The processor 13 performs signal transmission with one of the first radio frequency channel 14 or the second radio frequency channel 15, and a signal transmission channel of the other is closed. In this manner, strength of a signal of the first antenna component 141 and strength of a signal of the second antenna component 151 of the foldable electronic device in the unfolded state may be tested in advance, and then instructions are embedded in the processor 13. In this way, one of the first antenna component 141 and the second antenna component 151 is used as an antenna component with a stronger signal to preferentially communicate with the processor 13.
(2) The processor 13 performs signal transmission with a radio frequency channel with higher communication signal strength in the first radio frequency channel 14 or the second radio frequency channel 15. In this manner, strength of a communication signal of the first radio frequency channel 14 or strength of a communication signal of the second radio frequency channel 15 may be compared to determine a radio frequency channel that performs signal transmission with the processor 13.

The strength of the communication signal of the first radio frequency channel 14 or the strength of the communication signal of the second radio frequency channel 15 may be compared in at least one of the following two manners: (1) The processor 13 obtains the communication signal of the first radio frequency channel 14 and the communication signal of the second radio frequency channel 15, compares the strength of the communication signal of the first radio frequency channel 14 with the strength of the communication signal of the second radio frequency channel 15, and communicates with the radio frequency channel with the higher communication signal strength; or (2) at least one of the first radio frequency channel 14 and the second radio frequency channel 15 obtains a communication signal of the other one, and compares the strength of the communication signal of the first radio frequency channel 14 with the strength of the communication signal of the second radio frequency channel 15, and the radio frequency channel with the higher communication signal strength communicates with the processor 13.

In addition, in an embodiment, the communication method further includes: When determining that the foldable electronic device is in the unfolded state, the processor 13 may periodically compare communication signal strength of the first radio frequency channel 14 with communication signal strength of the second radio frequency channel 15 based on a preset frequency, and the processor 13 communicates with the radio frequency channel with the higher communication signal strength. If communication signal strength of a currently used radio frequency channel is lower than communication signal strength of the other radio frequency channel, the other radio frequency channel communicates with the processor 13 instead.

Similarly, in S13, when one of the first radio frequency channel 14 and the second radio frequency channel 15 communicates with the processor 13, the other of the first radio frequency channel 14 and the second radio frequency channel 15 may be in a working state to obtain an electromagnetic wave signal, or may be in a non-working state not to obtain an electromagnetic wave signal, signal transmission between the processor 13 and the other of the first radio frequency channel 14 and the second radio frequency channel 15 may not be performed, and a communication signal generated by the other of the first radio frequency channel 14 and the second radio frequency channel 15 may be used as a standby signal. When the radio frequency channel that communicates with the processor 13 is faulty and cannot obtain an electromagnetic wave signal or cannot process or convert an electromagnetic wave signal, the other radio frequency channel may establish communication with the processor 13. In an embodiment of this application, when one of the first radio frequency channel 14 and the second radio frequency channel 15 communicates with the processor 13, the other may be in a non-working state, to reduce a power loss of the foldable electronic device. When high-power data transmission needs to be performed, in the communication method of the foldable electronic device in another embodiment of this application, the processor 13 may simultaneously perform signal transmission with each 5G antenna in the first radio frequency channel 14 and the second radio frequency channel 15, to implement 5G 8*8 signal transmission, so as to increase a data transmission speed.

The foldable electronic device provided in this application can obtain better radio frequency antenna performance in different use scenarios in combination with communication methods of the foldable electronic device in different folding use scenarios. Compared with a conventional structure in which signal units are disposed in a centralized manner, this structure doubles a data throughput.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A foldable electronic device, comprising a foldable display, a first antenna component, a second antenna component, and a frame body, wherein
the frame body comprises a first frame body, a second frame body, and a third frame body that are sequentially connected to each other;
the foldable display is fastened to the frame body;
when the foldable electronic device is in an unfolded state, the foldable display is stacked above the frame body, the first antenna component is disposed at an edge of the first frame body, and the second antenna component is disposed at an edge of the third frame body; or when the foldable electronic device is in a fully folded state, the second frame body is stacked between the first frame body and the third frame body; and
the foldable electronic device further comprises one or more processors, a memory, a plurality of applications, and one or more programs, wherein the one or more programs are stored in the memory, the one or more programs comprise instructions, and when the instructions are executed by the electronic device, the foldable electronic device is enabled to perform the following step:
determining, based on a folding state of the foldable electronic device, to perform communication through at least one antenna in the first antenna component or second antenna component.

2. The foldable electronic device according to claim 1, wherein the foldable display comprises a first part, a second part, and a third part, wherein when the foldable electronic device is in the unfolded state, the first part is stacked above the first frame body, the second part is stacked above the second frame body, and the third part is stacked above the third frame body; or
when the foldable electronic device is in the fully folded state, the first part, the first frame body, the second frame body, the second part, the third part, and the third frame body are sequentially stacked; and
when the instructions are executed by the foldable electronic device, the foldable electronic device is enabled to perform the following step:
when the foldable electronic device is in the fully folded state, performing communication through at least a part of antennas in the first antenna component.

3. The foldable electronic device according to claim 1, wherein the foldable display comprises a first part, a second part, and a third part, wherein when the foldable electronic device is in the unfolded state, the first part is stacked above the first frame body, the second part is stacked above the second frame body, and the third part is stacked above the third frame body; or
when the foldable electronic device is in a partially folded state, the first part, the first frame body, the second frame body, and the second part are sequentially stacked, and the third frame body is unfolded relative to the second frame body; and
when the instructions are executed by the foldable electronic device, the foldable electronic device is enabled to perform the following step:
when the foldable electronic device is in the partially folded state, performing communication through at least a part of antennas in the second antenna component.

4. The foldable electronic device according to claim 1, wherein the foldable display comprises a first part, a second part, and a third part, wherein when the foldable electronic device is in the unfolded state, the first frame body, the second frame body, and the third frame body are unfolded, the first part is stacked above the first frame body, the second part is stacked above the second frame body, and the third part is stacked above the third frame body;
the foldable electronic device comprises a first radio frequency channel and a second radio frequency channel, wherein the first radio frequency channel comprises the first antenna component and a first radio frequency circuit, and the second radio frequency channel comprises the second antenna component and a second radio frequency circuit; and
when the instructions are executed by the foldable electronic device, the foldable electronic device is enabled to perform the following step:
when the foldable electronic device is in the unfolded state, determining, based on signal strength of the first radio frequency channel and signal strength of the second radio frequency channel, to perform communication through at least one antenna in the first antenna component or second antenna component.

5. The foldable electronic device according to any one of claims 2 to 4, wherein when the instructions are executed by the foldable electronic device, the foldable electronic device is enabled to perform the following steps:
in response to switching of the foldable electronic device from the fully folded state to the partially folded state, performing communication through the at least a part of antennas in the second antenna component;
in response to switching of the foldable electronic device from the partially folded state to the fully folded state, performing communication through the at least a part of antennas in the first antenna component;
in response to switching of the foldable electronic device from the partially folded state to the unfolded state, determining, based on the signal strength of the first radio frequency channel and the signal strength of the second radio frequency channel, to perform communication through at least one antenna in the first antenna component or second antenna component;
if the foldable electronic device is in the unfolded state and performs communication through at least one antenna in the first antenna component, in response to switching of the foldable electronic device from the unfolded state to the partially folded state, performing communication through at least one antenna in the second antenna component; or
if the foldable electronic device is in the unfolded state and performs communication through at least one antenna in the second antenna component, when the foldable electronic device switches from the unfolded state to the partially folded state, continuing to perform communication through the at least one antenna in the second antenna component.

6. The foldable electronic device according to any one of claims 1 to 5, wherein the foldable electronic device comprises the first radio frequency channel and the second radio frequency channel, the first radio frequency channel comprises the first antenna component and the first radio frequency circuit, and the second radio frequency channel comprises the second antenna component and the second radio frequency circuit; and
the foldable electronic device further comprises a transfer module, and the transfer module is electrically connected between the second radio frequency circuit and the processor.

7. The foldable electronic device according to claim 6, wherein the processor and the first radio frequency circuit are disposed in the first frame body, and the transfer module and the second radio frequency circuit are disposed in the third frame body; or
the processor and the first radio frequency circuit are disposed in the first frame body, the transfer module is disposed in the second frame body, and the second radio frequency circuit is disposed in the third frame body.

8. The foldable electronic device according to claim 6 or 7, wherein the transfer module amplifies a signal of the second radio frequency circuit.

9. The foldable electronic device according to any one of claims 1 to 8, wherein a first hinge component is disposed between the first frame body and the first frame body, and a second hinge component is disposed between the second frame body and the third frame body;
the at least a part of antennas in the first antenna component are disposed at a first edge of the first frame body, and a length extension direction of the first edge is parallel to a length extension direction of the first hinge component; and
the at least a part of antennas in the second antenna component are disposed at a first edge of the third frame body, and a length extension direction of the first edge is parallel to a length extension direction of the second hinge component.

10. The foldable electronic device according to claim 9, wherein the first antenna component comprises a 2G (2-generation wireless telephone technology) antenna, a 3G (3rd-generation) antenna, a 4G (the 4th generation mobile communication technology) antenna, and a 5G (5th generation mobile communication technology) antenna, and the first antenna component further comprises at least one of the following antennas: a global positioning system (global positioning system, GPS) antenna, a wireless fidelity (wireless fidelity, Wi-Fi) antenna, or a Bluetooth (Bluetooth, BT) antenna; and
each second antenna component comprises a 2G antenna, a 3G antenna, a 4G antenna, and a 5G antenna, and the second antenna component further comprises at least one of the following antennas: a GPS antenna, a Wi-Fi antenna, or a BT antenna.

11. The foldable electronic device according to claim 10, wherein the first antenna component comprises four 5G antennas, the second antenna component comprises four 5G antennas, and the foldable electronic device performs communication through the four 5G antennas in the first antenna component or the four 5G antennas in the second antenna component, so that the foldable electronic device implements 5G 4*4 multiple-input multiple-output (multiple-input multiple-output, MIMO).

12. The foldable electronic device according to claim 10, wherein the first antenna component comprises four 5G antennas, the second antenna component comprises four 5G antennas, and the foldable electronic device performs communication through the four 5G antennas in the first antenna component and the four 5G antennas in the second antenna component, so that the foldable electronic device implements 5G 8*8 MIMO.

13. A foldable electronic device, comprising a foldable display, a first antenna component, a second antenna component, and a frame body, wherein
the frame body comprises a first frame body, a second frame body, a third frame body, and a fourth frame body that are sequentially connected to each other;
the foldable display is fastened to the frame body;
when the foldable electronic device is in an unfolded state, the foldable display is stacked above the frame body, the first antenna component is disposed at an edge of the first frame body, and the second antenna component is disposed at an edge of the fourth frame body; or when the foldable electronic device is in a fully folded state, the second frame body and the third frame body are stacked between the first frame body and the fourth frame body; and
the foldable electronic device further comprises one or more processors, a memory, a plurality of applications, and one or more programs, wherein the one or more programs are stored in the memory, the one or more programs comprise instructions, and when the instructions are executed by the electronic device, the foldable electronic device is enabled to perform the following step:
determining, based on a folding state of the foldable electronic device, to perform communication through at least one antenna in the first antenna component or second antenna component.

14. A communication method applied to a foldable electronic device, wherein the foldable electronic device comprises a foldable display, a first antenna component, a second antenna component, and a frame body, wherein
the frame body comprises a first frame body, a second frame body, and a third frame body that are sequentially connected to each other;
the foldable display is fastened to the frame body; and
when the foldable electronic device is in an unfolded state, the foldable display is stacked above the frame body, the first antenna component is disposed at an edge of the first frame body, and the second antenna component is disposed at an edge of the third frame body; or when the foldable electronic device is in a fully folded state, the second frame body is stacked between the first frame body and the third frame body; and
the communication method comprises: determining, based on a folding state of the foldable electronic device, to perform communication through at least one antenna in the first antenna component or second antenna component.

15. The communication method according to claim 14, wherein the foldable display comprises a first part, a second part, and a third part, wherein when the foldable electronic device is in the unfolded state, the first part is stacked above the first frame body, the second part is stacked above the second frame body, and the third part is stacked above the third frame body; or
when the foldable electronic device is in the fully folded state, the first part, the first frame body, the second frame body, the second part, the third part, and the third frame body are sequentially stacked; and
the communication method further comprises:
when the foldable electronic device is in the fully folded state, performing communication through at least a part of antennas in the first antenna component.

16. The communication method according to claim 14, wherein the foldable display comprises a first part, a second part, and a third part, wherein when the foldable electronic device is in the unfolded state, the first part is stacked above the first frame body, the second part is stacked above the second frame body, and the third part is stacked above the third frame body; or
when the foldable electronic device is in a partially folded state, the first part, the first frame body, the second frame body, and the second part are sequentially stacked, and the third frame body is unfolded relative to the second frame body; and
the communication method further comprises:
when the foldable electronic device is in the partially folded state, performing communication through at least a part of antennas in the second antenna component.

17. The communication method according to claim 14, wherein the foldable display comprises a first part, a second part, and a third part, wherein when the foldable electronic device is in the unfolded state, the first frame body, the second frame body, and the third frame body are unfolded, the first part is stacked above the first frame body, the second part is stacked above the second frame body, and the third part is stacked above the third frame body; and
the foldable electronic device comprises a first radio frequency channel and a second radio frequency channel, wherein the first radio frequency channel comprises the first antenna component and a first radio frequency circuit, and the second radio frequency channel comprises the second antenna component and a second radio frequency circuit; and
the communication method further comprises:
when the foldable electronic device is in the unfolded state, determining, based on signal strength of the first radio frequency channel and signal strength of the second radio frequency channel, to perform communication through at least one antenna in the first antenna component or second antenna component.

18. The communication method according to any one of claims 15 to 17, wherein the communication method further comprises:
in response to switching of the foldable electronic device from the fully folded state to the partially folded state, performing communication through the at least a part of antennas in the second antenna component;
in response to switching of the foldable electronic device from the partially folded state to the fully folded state, performing communication through the at least a part of antennas in the first antenna component;
in response to switching of the foldable electronic device from the partially folded state to the unfolded state, determining, based on the signal strength of the first radio frequency channel and the signal strength of the second radio frequency channel, to perform communication through at least one antenna in the first antenna component or second antenna component;
if the foldable electronic device is in the unfolded state and performs communication through at least one antenna in the first antenna component, in response to switching of the foldable electronic device from the unfolded state to the partially folded state, performing communication through at least one antenna in the second antenna component; or
if the foldable electronic device is in the unfolded state and performs communication through at least one antenna in the second antenna component, when the foldable electronic device switches from the unfolded state to the partially folded state, continuing to perform communication through the at least one antenna in the second antenna component.
